# EUROPEAN PATENT APPLICATION

(11) **EP 4 513 976 A1**
(43) Date of publication of application: **26.02.2025**
(21) Application number: 22937814.6
(22) Date of filing: 20.04.2022
(51) Int. Cl.: H04W 52/02

(54) **WIRELESS COMMUNICATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2022/087953
(87) International publication number: WO 2023/201577

(57) **Abstract**

Embodiments of the present invention provide a wireless communication method. The method is executed by a terminal, and the method comprise: in response to a first transceiver of the terminal receiving a wake-up signal, waking up a second transceiver of the terminal, wherein the power consumption of the first transceiver is less than the power consumption of the second transceiver; and executing a processing operation based on the second transceiver on the basis of a configuration result of predetermined configuration information, wherein the processing operation comprises an operation of monitoring or stopping monitoring.

## Description

### TECHNICAL FIELD

The disclosure relates to the field of wireless communication technologies, but not limited to wireless communication technologies, and provides a wireless communication method, a wireless communication device, a communication device and a storage medium.

### BACKGROUND

In wireless communication technology, in order to reduce power consumption, a wakeup signal (WUS) is introduced for the radio resource control (RRC) connected state. For a RRC idle state, a power saving signal, namely the paging early indication (PEI), is introduced. Regardless of the scenario, the terminal needs to detect the wakeup signal or the power saving signal through the radio frequency module.

In the related technology, a separate transceiver (ultra-low power wake-up receiver) is introduced to receive the wakeup signal or a power wake-up signal. After the introduction of the separate transceiver, it needs to be considered that how the terminal works.

### SUMMARY

Embodiments of the present disclosure provide a wireless communication method, a wireless communication device, a communication device and a storage medium.

According to a first aspect of the embodiment of the present disclosure, a wireless communication method is performed by a terminal, and includes:
waking up a second transceiver of the terminal in response to a first transceiver of the terminal receiving a wake-up signal;
performing a processing operation based on the second transceiver according to a configuration result of predetermined configuration information, wherein the processing operation includes an operation of monitoring or an operation of stopping monitoring.

In an embodiment of the present disclosure, the predetermined configuration information includes at least one of:
a monitoring period;
a monitoring offset;
a monitoring time within each monitoring period; or
a monitoring duration.

In an embodiment of the present disclosure, the wireless communication method further includes:
receiving the predetermined configuration information.

In an embodiment of the present disclosure, the wireless communication method further includes:
starting or restarting an inactive timer of discontinuous reception (DRX) in response to the second transceiver being awakened.

In an embodiment of the present disclosure, the wireless communication method further includes:
stopping the inactive timer of the DRX in response to receiving a first type of media access control (MAC) control element (CE) or a second type of MAC CE.

In an embodiment of the present disclosure, the performing the processing operation based on the second transceiver according to the configuration result of the predetermined configuration information, includes:
performing the monitoring operation based on the second transceiver according to the predetermined configuration information in response to the inactive timer of the DRX being expired or stopped and the predetermined configuration information being configured;
   or,
stopping the DRX or turning off the second transceiver in response to the inactive timer of the DRX being expired or stopped and the predetermined configuration information being not configured.

In an embodiment of the present disclosure, the performing the processing operation based on the second transceiver according to the configuration result of the predetermined configuration information, includes:
performing the monitoring operation based on the second transceiver according to the predetermined configuration information in response to receiving the first type of MAC CE and the predetermined configuration information being configured;
   or,
stopping the DRX or turning off the second transceiver in response to receiving the first type of MAC CE and the predetermined configuration information being not configured.

In an embodiment of the present disclosure, the performing the processing operation based on the second transceiver according to the configuration result of the predetermined configuration information, includes:
stopping the monitoring operation based on the second transceiver according to the predetermined configuration information in response to receiving the second type of MAC CE and the predetermined configuration information being configured.

In an embodiment of the present disclosure, the wireless communication method further includes:
stopping the DRX or turning off the second transceiver in response to receiving the second type of MAC CE.

In an embodiment of the present disclosure, the wireless communication method further includes:
stopping the DRX or turning off the second transceiver in response to stopping the monitoring operation based on the second transceiver based on the predetermined configuration information.

According to a second aspect, a wireless communication method is executed by an access network device, and includes:
sending predetermined configuration information to a terminal;
in which the predetermined configuration information is used for a first transceiver of the terminal to perform a processing operation based on a second transceiver according to a configuration result of the predetermined configuration information after waking up the second transceiver of the terminal; wherein the processing operation includes an operation of monitoring or an operation of stopping monitoring.

In an embodiment of the present disclosure, the predetermined configuration information includes at least one of:
a monitoring period;
a monitoring offset;
a monitoring time within each monitoring period; or
a monitoring duration.

In an embodiment of the present disclosure, the wireless communication method further includes:
sending a first type of media access control (MAC) control element (CE) to the terminal;
in which the first type of MAC CE is used to indicate that the terminal performs the processing operation based on the second transceiver according to the configuration result of the predetermined configuration information.
In an embodiment of the present disclosure, the wireless communication method further includes:
   sending a second type of MAC CE to the terminal;
   in which the second type of MAC CE is used to indicate that the terminal performs the processing operation based on the second transceiver, stops DRX, or turns off the second transceiver according to the configuration result of the predetermined configuration information.

According to a third aspect of the embodiment of the present disclosure, a wireless communication device includes:
a wake-up module, configured to wake up a second transceiver of the terminal in response to a first transceiver of the terminal receiving a wake-up signal;
an execution module, configured to perform a processing operation based on the second transceiver according to a configuration result of predetermined configuration information, wherein the processing operation includes an operation of monitoring or an operation of stopping monitoring.

According to a fourth aspect of the embodiment of the present disclosure, a wireless communication method is performed by an access network device and includes:
a sending module, configured to send predetermined configuration information to a terminal;
in which the predetermined configuration information is used for a first transceiver of the terminal to perform a processing operation based on a second transceiver according to a configuration result of the predetermined configuration information after waking up the second transceiver of the terminal; the processing operation includes an operation of monitoring or an operation of stopping monitoring.

According to a fifth aspect of the embodiment of the present disclosure, a communication device includes: a memory; and a processor, connected to the memory, and configured to execute computer executable instructions stored on the memory to implement the wireless communication method.

According to a sixth aspect of the embodiment of the present disclosure, a computer storage medium has computer executable instructions stored thereon, in which the computer executable instructions are executed by a processor to implement the wireless communication method.

In an embodiment of the present disclosure, in response to a first transceiver of a terminal receiving a wake-up signal, a second transceiver of the terminal is awakened, a processing operation based on the second transceiver is performed based on the configuration result of the predetermined configuration information, in which the processing operation includes the operation of monitoring or stopping monitoring. In this way, after the second transceiver of the terminal is awakened, the operation of monitoring or stopping monitoring based on the second transceiver can be performed based on the configuration information result of the predetermined configuration information. Compared with that the processing operation based on the second transceiver cannot be performed based on the predetermined configuration information, it can adapt to the predetermined configuration information, so that the operation of the second transceiver is more efficient and reliable.

### BRIEF DESCRIPTION OF THE DRAWINGS

FIG. 1 is a schematic diagram of the structure of a wireless communication system according to an embodiment of the present disclosure.
FIG. 2 is a schematic diagram of a flow chart of a wireless communication method according to an embodiment of the present disclosure.
FIG. 3 is a schematic diagram of monitoring of wireless communication according to an embodiment of the present disclosure.
FIG. 4 is a schematic diagram of a flow chart of a wireless communication method according to an embodiment of the present disclosure.
FIG. 5 is a schematic diagram of a flow chart of a wireless communication method according to an embodiment of the present disclosure.
FIG. 6 is a schematic diagram of a flow chart of a wireless communication method according to an embodiment of the present disclosure.
FIG. 7 is a schematic diagram of a flow chart of a wireless communication method according to an embodiment of the present disclosure.
FIG. 8 is a schematic diagram of a wireless communication method according to an embodiment of the present disclosure.
FIG. 9 is a schematic diagram of a wireless communication method according to an embodiment of the present disclosure.
FIG. 10 is a schematic diagram of a wireless communication method according to an embodiment of the present disclosure.
FIG. 11 is a schematic diagram of a wireless communication method according to an embodiment of the present disclosure.
FIG. 12 is a schematic diagram of a wireless communication method according to an embodiment of the present disclosure.
FIG. 13 is a schematic diagram of a wireless communication method according to an embodiment of the present disclosure.
FIG. 14 is a schematic diagram of a wireless communication device according to an embodiment of the present disclosure.
FIG. 15 is a schematic diagram of a wireless communication device according to an embodiment of the present disclosure.
FIG. 16 is a schematic diagram of the structure of a terminal according to an embodiment of the present disclosure.
FIG. 17 is a block diagram of a base station according to an embodiment of the present disclosure.

### DETAILED DESCRIPTION

Here, exemplary embodiments will be described in detail by combination with the accompanying drawings. When the following description refers to the drawings, unless otherwise indicated, the same reference numbers in different drawings represent the same or similar elements. The embodiments described in the following description do not represent all embodiments consistent with the embodiments of the present disclosure. Instead, they are only examples of devices and methods consistent with some aspects of the embodiments of the present disclosure as detailed in the attached claims.

The terms used in the embodiments of the present disclosure are only for the purpose of describing specific embodiments and are not intended to limit the embodiments of the present disclosure. The singular forms "one" and "a" used in the embodiments of the present disclosure and the attached claims are also intended to include the plural forms unless the context clearly indicates other meanings. It should also be understood that the term "and/or" used herein refers to and includes any or all possible combinations of one or more associated listed items.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein can be interpreted as "at the time of" or "when" or "in response to".

For the purpose of simplicity and ease of understanding, the terms used in the present disclosure to characterize the size relationship are "greater than" or "less than". However, for those skilled in the art, it can be understood that the term "greater than" also covers the meaning of "greater than or equal to", and "less than" also covers the meaning of "less than or equal to".

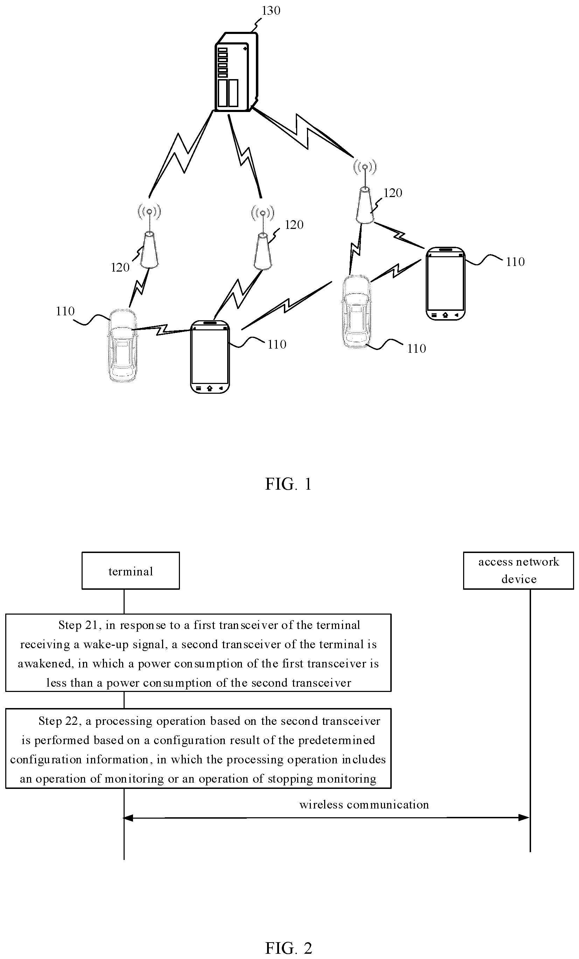

FIG. 1 shows a schematic diagram of a structure of a wireless communication system according to an embodiment of the present disclosure. As shown in FIG. 1, the wireless communication system is a communication system based on mobile communication technology, and the wireless communication system may include: a plurality of user devices 110 and a plurality of base stations 120.

The user device 110 may be a device that provides voice and/or data connectivity to a user. The user device 110 can communicate with one or more core networks via a radio access network (RAN). The user device 110 may be an Internet of Things user device, such as a sensor device, a mobile phone, and a computer with an Internet of Things user device, for example, a fixed, portable, pocket-sized, handheld, computer-built-in, or vehicle-mounted device. For example, station (STA), subscriber unit, subscriber station, mobile station, mobile, remote station, access point, remote terminal, access terminal, user terminal, user agent, user device, or user equipment. Alternatively, user device 110 may also be a device of an unmanned aerial vehicle. Alternatively, user device 110 may also be a vehicle-mounted device, such as a driving computer with wireless communication function, or a wireless user device connected to an external driving computer. Alternatively, user device 110 may also be a roadside device, such as a street lamp, signal lamp or other roadside device with wireless communication function.

The base station 120 may be a network side device in a wireless communication system. The wireless communication system may be a 4th generation mobile communication technology (4G) system, also known as a long term evolution (LTE) system; or, the wireless communication system may be a 5G system, also known as a new air interface system or a 5G NR system. Alternatively, the wireless communication system may be a next generation system of the 5G system. The access network in the 5G system may be referred to as New Generation-Radio Access Network (NG-RAN).

The base station 120 may be an evolved base station (eNB) in a 4G system. Alternatively, the base station 120 may also be a base station (gNB) using a centralized distributed architecture in a 5G system. When the base station 120 adopts a centralized distributed architecture, it generally includes a centralized unit (CU) and at least two distributed units (DU). The centralized unit is provided with a protocol stack of a packet data convergence protocol (PDCP) layer, a radio link layer control protocol (RLC) layer, and a media access control (MAC) layer; the distributed unit is provided with a protocol stack of a physical (PHY) layer. The specific implementation method of the base station 120 is not limited in the embodiment of the present disclosure.

A wireless connection can be established between the base station 120 and the user device 110 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface can also be a wireless air interface based on the next generation mobile communication network technology standard on the basis of 5G.

In some embodiments, an End to End (E2E) connection can also be established between the user devices 110, for example, vehicle to vehicle (V2V) communication, vehicle to infrastructure (V2I) communication and vehicle to pedestrian (V2P) communication scenarios in vehicle to everything (V2X) communication.

Here, the user device can be considered as the terminal device of the following embodiments.

In some embodiments, the wireless communication system can also include a network management device 130.

Several base stations 120 are respectively connected to the network management device 130. Among them, the network management device 130 can be a core network device in the wireless communication system, for example, the network management device 130 can be a mobility management entity (MME) in the evolved packet core (EPC). Alternatively, the network management device may also be other core network devices, such as a Serving GateWay (SGW), a Public Data Network GateWay (PGW), a Policy and Charging Rules Function (PCRF), or a Home Subscriber Server (HSS). The present disclosure embodiment does not limit the implementation form of the network management device 130.

In order to facilitate the understanding of those skilled in the art, an embodiment of the present disclosure lists multiple implementation methods to clearly illustrate the technical solution of the present disclosure. Of course, those skilled in the art can understand that the multiple embodiments provided in the present disclosure can be executed separately, or can be executed together with the methods of other embodiments in the present disclosure, or can be executed separately or in combination with some methods in other related technologies; the present disclosure embodiment does not limit this.

In order to better understand the technical solution described in any embodiment of the present disclosure, first, the application scenario in the relevant technology is explained as follows.

In one embodiment, for the RRC connected state, a power saving signal, that is, a wakeup signal (WUS) or power saving downlink control information (DCP, DCI for power saving) is introduced. The WUS signal is a low power detection signal. If the terminal detects the WUS signal, it means that the physical downlink control channel (PDCCH) monitoring is necessary, but if the WUS is not detected, the PDCCH monitoring is skipped.

In one embodiment, for the RRC idle state, the power saving signal (for example, PEI) is usually configured before the paging occasion (PO). If the terminal does not detect the power saving signal, it is necessary to skip the paging DCI, otherwise, it is necessary to monitor the paging DCI.

In one embodiment, the RRC connected state is enhanced and a PDCCH skipping mechanism is introduced, that is, PDCCH skipping will be carried in the DCI to notify the terminal to skip a period of monitoring or switch the search space group.

It should be noted that no matter what kind of power saving signal, a modem in the terminal is required to detect the power saving signal at this time.

In one embodiment, a separate transceiver (ultra-low power wake-up receiver) is introduced to receive the power saving signal, and the modem part or the main radio part of the terminal can only be awakened after the separate transceiver is awakened, or otherwise the modem part will remain in a dormant state.

As shown in FIG. 2, a wireless communication method is provided in this embodiment, in which the method is executed by a terminal, and the method includes the following steps.

Step 21, in response to a first transceiver of the terminal receiving a wake-up signal, a second transceiver of the terminal is awakened, in which a power consumption of the first transceiver is less than that of the second transceiver.

Step 22, a processing operation based on the second transceiver is performed according to a configuration result of the predetermined configuration information, in which the processing operation includes an operation of monitoring or an operation of stopping monitoring.

Here, the terminal in the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of a new air interface NR terminal (e.g., an NR terminal of R17).

The access network device in the present disclosure may be a base station, for example, a base station of a third generation mobile communication (3G) network, a base station of a fourth generation mobile communication (4G) network, a base station of a fifth generation mobile communication (5G) network, or other evolved base stations.

The first transceiver may be a single transceiver (ultra-low power wake-up receiver).

The second transceiver may be a main radio receiver.

The wake-up signal may be a low power wake-up signal (Low power WUS), which is used to wake up the second transceiver.

In one embodiment, the predetermined configuration information includes at least one of the following:
a monitoring period;
a monitoring offset;
a monitoring time within each monitoring period; the monitoring time may be a duration of monitoring, or a starting time;
a monitoring duration.

It should be noted that the monitoring period is the period during which the second transceiver monitors data. If the monitoring offset is not configured in the predetermined configuration information, data is monitored starting from 0. If the monitoring offset N is configured, data monitoring is performed after offsetting (waiting) N monitoring periods. In a single monitoring period, the duration for receiving data can be the duration of the onduration timer in the discontinuous reception DRX. The monitoring duration can include at least one monitoring period. The monitoring period can be called a "long period" or a "short period". The monitoring period, whether it is a "long period" or a "short period", is an optional configuration.

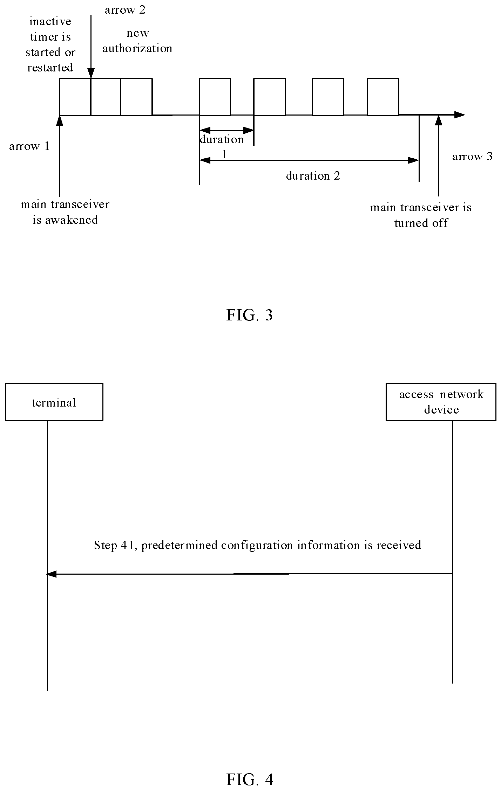

For example, in FIG. 3, arrow 1 is the position where the main transceiver (corresponding to the second transceiver) is awakened; arrow 2 is the position where the inactive timer of the discontinuous reception DRX is started or restarted; duration 1 is the monitoring period; duration 2 is the monitoring duration; arrow 3 is the position where the main transceiver is turned off.

In one embodiment, in response to the first transceiver of the terminal receiving a wake-up signal, the second transceiver of the terminal is awakened, in which the power consumption of the first transceiver is less than that of the second transceiver; it is determined whether predetermined configuration information is configured based on a predetermined protocol; a processing operation based on the second transceiver is performed based on the configuration result of the predetermined configuration information, in which the processing operation includes an operation of monitoring or stopping monitoring. Exemplarily, in response to the predetermined configuration information being configured, a monitoring operation is performed based on the second transceiver; or, in response to the predetermined configuration information being not configured, the monitoring operation is stopped based on the second transceiver. It should be noted that the step of "determining whether the predetermined configuration information is configured" can also be before "waking up the second transceiver of the terminal", which is not limited here, but is only used as an exemplary explanation.

In one embodiment, in response to the first transceiver of the terminal receiving a wake-up signal, the second transceiver of the terminal is awakened, in which the power consumption of the first transceiver is less than that of the second transceiver; predetermined configuration information is received; a processing operation based on the second transceiver is performed based on the configuration result of the predetermined configuration information, in which the processing operation includes an operation of monitoring or stopping monitoring. Exemplarily, in response to receiving the predetermined configuration information, the monitoring operation is performed based on the second transceiver; or, in response to not receiving the predetermined configuration information, the monitoring operation based on the second transceiver is stopped. It should be noted that the step of "receiving the predetermined configuration information" can also be before "waking up the second transceiver of the terminal", which is not limited here and is only used as an exemplary explanation.

In one embodiment, in response to a first transceiver of a terminal receiving a wake-up signal, a second transceiver of the terminal is awakened, in which the power consumption of the first transceiver is less than the power consumption of the second transceiver; in response to the second transceiver being awakened, an inactive timer of a discontinuous reception DRX is started or restarted. Here, it can be understood that starting or restarting the inactive timer of a discontinuous reception DRX actually extends the timing time of the inactive timer, so that the terminal can continue to monitor data. It should be noted that after receiving a new data authorization from the network, the inactive timer of a discontinuous reception DRX can also be started or restarted. It should be noted that in this embodiment, if the terminal receives a first type of access control MAC control element CE or a second type of MAC CE after starting or restarting the inactive timer of a discontinuous reception DRX, the terminal will stop the inactive timer of a discontinuous reception DRX. Among them, the first type of MAC CE can be an instruction issued by the network based on the result of estimating that the terminal still has a small amount of data to be transmitted, or it can be a first type of downlink control information (DCI); the second type of MAC CE can be an instruction issued by the network based on the result of estimating that the terminal has no data to be transmitted within a predetermined duration, or it can be a second type of DCI. It should be noted that the format for transmitting the DCI sent is not limited.

In one embodiment, in response to the first transceiver of the terminal receiving a wake-up signal, the second transceiver of the terminal is awakened, in which the power consumption of the first transceiver is less than the power consumption of the second transceiver; in response to the second transceiver being awakened, the inactive timer of the discontinuous reception DRX is started or restarted. In response to the inactive timer of the discontinuous reception DRX being expired or stopped and the predetermined configuration information being configured, a monitoring operation based on the second transceiver is performed based on the predetermined configuration information; or, in response to the inactive timer of the discontinuous reception DRX being expired or stopped and the predetermined configuration information being not configured, the discontinuous reception DRX is stopped or the second transceiver is turned off. It should be noted that the inactive timer of the discontinuous reception DRX being expired may be that the inactive timer of the discontinuous reception DRX reaches the timing time; the inactive timer of the discontinuous reception DRX being stopped may be after receiving a MAC CE, for example, after receiving a first type of MAC CE or after receiving a second type of MAC CE.

In one embodiment, in response to a first transceiver of a terminal receiving a wake-up signal, a second transceiver of the terminal is awakened, in which the power consumption of the first transceiver is less than the power consumption of the second transceiver; after the inactivity timer of the discontinuous reception DRX is expired or stopped, a processing operation based on the second transceiver is performed based on the configuration result of the predetermined configuration information, in which the processing operation includes an operation of monitoring or stopping monitoring. In response to the inactivity timer of the discontinuous reception DRX being expired or stopped and the predetermined configuration information being configured, a monitoring operation based on the second transceiver is performed based on the predetermined configuration information; or, in response to the inactivity timer of the discontinuous reception DRX being expired or stopped and the predetermined configuration information being not configured, the discontinuous reception DRX is stopped or the second transceiver is turned off.

In one embodiment, in response to a first transceiver of a terminal receiving a wake-up signal, a second transceiver of the terminal is awakened, in which the power consumption of the first transceiver is less than the power consumption of the second transceiver; a processing operation based on the second transceiver is performed based on the configuration result of the predetermined configuration information and whether a first type MAC CE is received, in which the processing operation includes an operation of monitoring or stopping monitoring. Exemplarily, in response to receiving a first type of MAC CE and the predetermined configuration information being configured, a monitoring operation based on the second transceiver is performed based on the predetermined configuration information; or, in response to receiving a first type MAC CE and the predetermined configuration information being not configured, discontinuous reception of DRX is stopped or the second transceiver is turned off.

In one embodiment, in response to the first transceiver of the terminal receiving a wake-up signal, the second transceiver of the terminal is awakened, in which the power consumption of the first transceiver is less than the power consumption of the second transceiver; a processing operation based on the second transceiver is performed based on the configuration result of the predetermined configuration information and/or whether the second type of MAC CE is received, in which the processing operation includes an operation of monitoring or stopping monitoring. Exemplarily, in response to receiving a second type of MAC CE and the predetermined configuration information being configured, the monitoring operation based on the second transceiver is stopped based on the predetermined configuration information, and here, it can be to control the monitoring duration timer to stop or restart; or, in response to receiving a second type of MAC CE, the discontinuous reception of DRX is stopped or the second transceiver is turned off.

It should be noted that in response to stopping the monitoring operation based on the second transceiver according to the predetermined configuration information, the discontinuous reception of DRX is stopped or the second transceiver is turned off.

In an embodiment of the present disclosure, in response to a first transceiver of a terminal receiving a wake-up signal, a second transceiver of the terminal is awakened, in which the power consumption of the first transceiver is less than that of the second transceiver; a processing operation based on the second transceiver is performed based on the configuration result of the predetermined configuration information, in which the processing operation includes the operation of monitoring or stopping monitoring. In this way, after the second transceiver of the terminal is awakened, the operation of monitoring or stopping monitoring based on the second transceiver can be performed based on the configuration information result of the predetermined configuration information. Compared with that the processing operation based on the second transceiver cannot be performed based on the predetermined configuration information, it can adapt to the predetermined configuration information, so that the operation of the second transceiver is more efficient and reliable.

It should be noted that those skilled in the art can understand that the method provided in the embodiment of the present disclosure can be performed alone or together with some methods in the embodiment of the present disclosure or some methods in related technologies.

As shown in FIG. 4, a wireless communication method is provided in the present embodiment, the wireless method is performed by a terminal and includes the following step.

Step 41, predetermined configuration information is received.

The predetermined configuration information includes at least one of:
a monitoring period;
a monitoring offset;
a monitoring time in each monitoring period; or
a monitoring duration.

In one embodiment, in response to the first transceiver of the terminal receiving a wake-up signal, the second transceiver of the terminal is awakened, in which the power consumption of the first transceiver is less than that of the second transceiver; predetermined configuration information is received; a processing operation based on the second transceiver is performed based on the configuration result of the predetermined configuration information, in which the processing operation includes an operation of monitoring or stopping monitoring. Exemplarily, in response to receiving the predetermined configuration information, a monitoring operation is performed based on the second transceiver; or, in response to not receiving the predetermined configuration information, the monitoring operation based on the second transceiver is stopped. It should be noted that the step of "receiving the predetermined configuration information" can also be before "waking up the second transceiver of the terminal", which is not limited here, but is only used as an exemplary explanation.

It should be noted that those skilled in the art can understand that the method provided in the embodiment of the present disclosure can be executed alone or together with some methods in the embodiment of the present disclosure or some methods in related technologies.

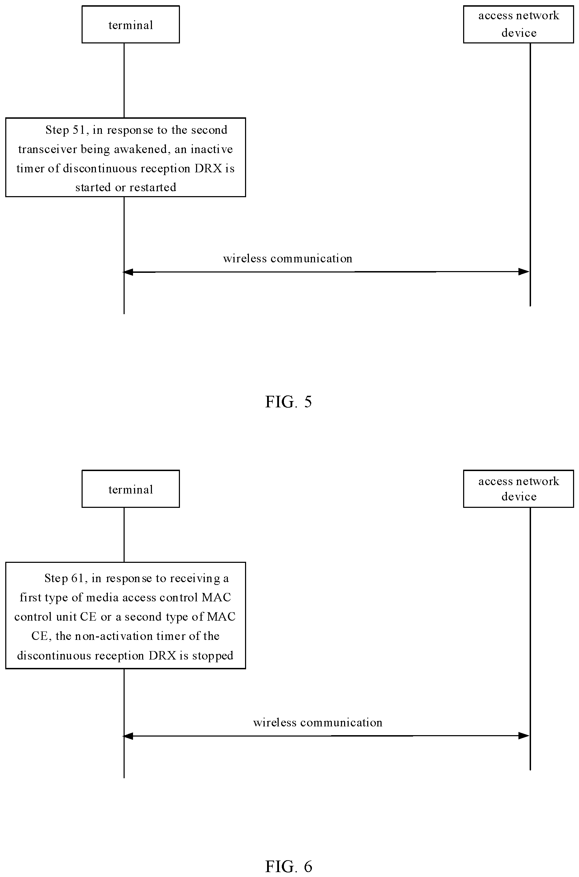

As shown in FIG. 5, a wireless communication method is provided in this embodiment, the wireless communication method is executed by the terminal and includes the following step.

Step 51, in response to the second transceiver being awakened, an inactive timer of discontinuous reception DRX is started or restarted.

In one embodiment, in response to a first transceiver of a terminal receiving a wake-up signal, a second transceiver of the terminal is awakened, in which the power consumption of the first transceiver is less than the power consumption of the second transceiver; in response to the second transceiver being awakened, an inactive timer of a discontinuous reception DRX is started or restarted. Here, it can be understood that starting or restarting the inactive timer of a discontinuous reception DRX actually extends the timing time of the inactive timer, so that the terminal can continue to monitor data. It should be noted that after receiving a new data authorization from the network, the inactive timer of a discontinuous reception DRX can also be started or restarted. It should be noted that in this embodiment, if the terminal receives a first type of access control MAC control element CE or a second type of MAC CE after starting or restarting the inactive timer of a discontinuous reception DRX, the terminal will stop the inactive timer of a discontinuous reception DRX. Among them, the first type of MAC CE can be an instruction issued by the network based on the result of estimating that the terminal still has a small amount of data to be transmitted, or it can be a first type of downlink control information DCI; the second type of MAC CE can be an instruction issued by the network based on the result of estimating that the terminal has no data to be transmitted within a predetermined period of time, or it can be a second type of DCI. It should be noted that the format for transmitting DCI sent is not limited.

It should be noted that those skilled in the art can understand that the method provided in the embodiment of the present disclosure can be executed alone or together with some methods in the embodiment of the present disclosure or some methods in related technologies.

As shown in FIG. 6, a wireless communication method is provided in the present embodiment, the wireless communication method is executed by a terminal and includes the following step.

Step 61, in response to receiving a first type of media access control MAC control unit CE or a second type of MAC CE, the non-activation timer of discontinuous reception DRX is stopped.

In one embodiment, in response to the first transceiver of the terminal receiving a wake-up signal, the second transceiver of the terminal is awakened, in which the power consumption of the first transceiver is less than the power consumption of the second transceiver; in response to the second transceiver being awakened, the non-activation timer of discontinuous reception DRX is started or restarted. In response to receiving a first type of media access control MAC information unit CE or a second type of MAC CE, the non-activation timer of discontinuous reception DRX is stopped. In response to the non-activation timer of the discontinuous reception DRX being stopped and predetermined configuration information being configured, a monitoring operation based on the second transceiver is performed based on the predetermined configuration information; or, in response to the non-activation timer of the discontinuous reception DRX being stopped and the predetermined configuration information being not configured, the discontinuous reception DRX is stopped or the second transceiver is turned off. It should be noted that the non-activation timer of the discontinuous reception DRX being expired may be that the non-activation timer of the discontinuous reception DRX reaches the timing time; the non-activation timer of the discontinuous reception DRX being stopped may be after receiving a MAC CE, for example, after receiving a first type of MAC CE or after receiving a second type of MAC CE.

It should be noted that those skilled in the art can understand that the method provided in the embodiment of the present disclosure may be executed alone or together with some methods in the embodiment of the present disclosure or some methods in related technologies.

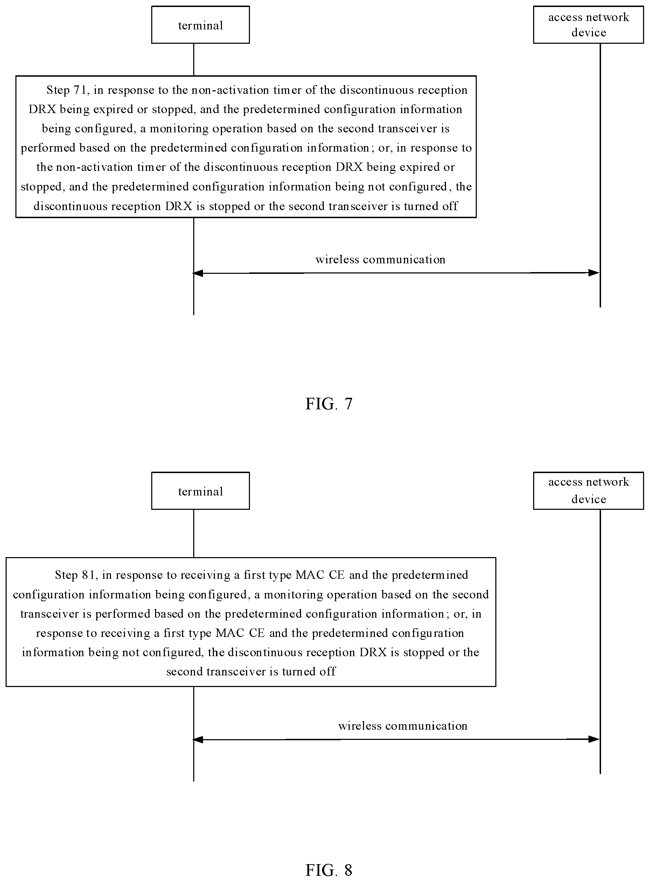

As shown in FIG. 7, a wireless communication method is provided in this embodiment, the wireless communication method is executed by a terminal and includes the following step.

Step 71, in response to the non-activation timer of the discontinuous reception DRX being expired or stopped, and the predetermined configuration information being configured, a monitoring operation based on the second transceiver is performed based on the predetermined configuration information; or, in response to the non-activation timer of the discontinuous reception DRX being expired or stopped, and the predetermined configuration information being not configured, the discontinuous reception DRX is stopped or the second transceiver is turned off.

In one embodiment, in response to the first transceiver of the terminal receiving a wake-up signal, the second transceiver of the terminal is awakened, in which the power consumption of the first transceiver is less than the power consumption of the second transceiver; after the non-activation timer of the discontinuous reception DRX is expired or stopped, a processing operation based on the second transceiver is performed based on the configuration result of the predetermined configuration information, in which the processing operation includes the operation of monitoring or stopping monitoring. In response to the non-activation timer of the discontinuous reception DRX being expired or stopped and the predetermined configuration information being configured, a monitoring operation based on the second transceiver is performed based on the predetermined configuration information; or, in response to the non-activation timer of the discontinuous reception DRX being expired or stopped and the predetermined configuration information being not configured, the discontinuous reception DRX is stopped or the second transceiver is turned off.

It should be noted that those skilled in the art can understand that the method provided in the embodiment of the present disclosure can be performed alone or together with some methods in the embodiment of the present disclosure or some methods in related technologies.

As shown in FIG. 8, a wireless communication method is provided in this embodiment, the wireless communication method is performed by a terminal and includes the following step.

Step 81, in response to receiving a first type MAC CE and the predetermined configuration information being configured, a monitoring operation based on the second transceiver is performed based on the predetermined configuration information; or, in response to receiving a first type MAC CE and the predetermined configuration information being not configured, the discontinuous reception DRX is stopped or the second transceiver is turned off.

In one embodiment, in response to the first transceiver of the terminal receiving a wake-up signal, the second transceiver of the terminal is awakened, in which the power consumption of the first transceiver is less than that of the second transceiver; a processing operation based on the second transceiver is performed based on the configuration result of the predetermined configuration information and whether the first type MAC CE is received, in which the processing operation includes an operation of monitoring or stopping monitoring. Exemplarily, in response to receiving the first type MAC CE and the predetermined configuration information being configured, a monitoring operation based on the second transceiver is performed based on the predetermined configuration information; or, in response to receiving the first type MAC CE and the predetermined configuration information being not configured, discontinuous reception DRX is stopped or the second transceiver is turned off.

It should be noted that those skilled in the art can understand that the method provided in the embodiment of the present disclosure can be performed alone or together with some methods in the embodiment of the present disclosure or some methods in related technologies.

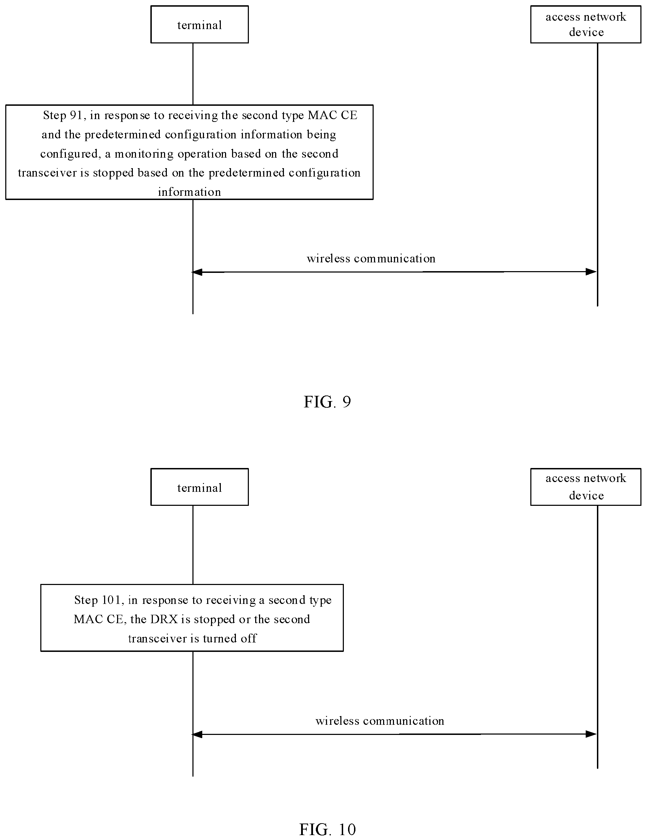

As shown in FIG. 9, a wireless communication method is provided in the present embodiment, the wireless communication method is performed by the terminal and includes the following step.

Step 91, in response to receiving a second type MAC CE and the predetermined configuration information being configured, a monitoring operation based on the second transceiver is stopped based on the predetermined configuration information.

In one embodiment, in response to the first transceiver of the terminal receiving a wake-up signal, the second transceiver of the terminal is awakened, in which the power consumption of the first transceiver is less than that of the second transceiver; a processing operation based on the second transceiver is performed based on the configuration result of the predetermined configuration information and/or whether the second type MAC CE is received, in which the processing operation includes an operation of monitoring or stopping monitoring. Exemplarily, in response to receiving the second type MAC CE and the predetermined configuration information being configured, the monitoring operation based on the second transceiver is stopped based on the predetermined configuration information, where the monitoring duration timer can be controlled to stop or restart; or, in response to receiving the second type of MAC CE, the discontinuous reception DRX is stopped or the second transceiver is turned off.

It should be noted that those skilled in the art can understand that the method provided in the embodiment of the present disclosure can be performed alone or together with some methods in the embodiment of the present disclosure or some methods in related technologies.

As shown in FIG. 10, a wireless communication method is provided in this embodiment, the wireless communication method is executed by a terminal and includes the following step.

Step 101, in response to receiving a second type MAC CE, the DRX is stopped or the second transceiver is turned off.

In one embodiment, in response to the first transceiver of the terminal receiving a wake-up signal, the second transceiver of the terminal is awakened, in which the power consumption of the first transceiver is less than the power consumption of the second transceiver; a processing operation based on the second transceiver is performed based on the configuration result of the predetermined configuration information and/or whether the second type MAC CE is received, in which the processing operation includes an operation of monitoring or stopping monitoring. In response to receiving the second type MAC CE, discontinuous reception DRX is stopped or the second transceiver is turned off.

It should be noted that in response to stopping the monitoring operation based on the second transceiver according to the predetermined configuration information, DRX is stopped or the second transceiver is turned off.

It should be noted that those skilled in the art can understand that the method provided in the embodiment of the present disclosure can be performed alone or together with some methods in the embodiment of the present disclosure or some methods in related technologies.

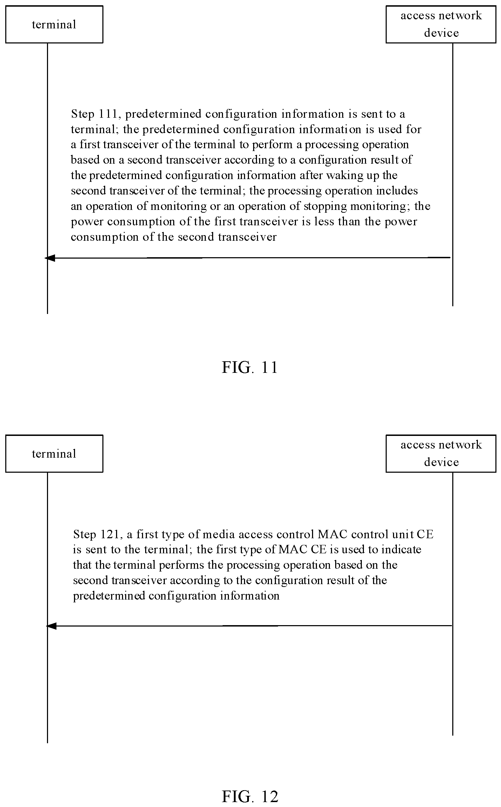

As shown in FIG. 11, a wireless communication method is provided in this embodiment, the wireless communication method is executed by an access network device and includes the following step.

Step 111, predetermined configuration information is sent to a terminal.

The predetermined configuration information is used for a first transceiver of the terminal to perform a processing operation based on a second transceiver according to a configuration result of the predetermined configuration information after waking up the second transceiver of the terminal; the processing operation includes an operation of monitoring or an operation of stopping monitoring; the power consumption of the first transceiver is less than the power consumption of the second transceiver.

Here, the terminal involved in the present disclosure may be, but is not limited to, a mobile phone, a wearable device, a vehicle terminal, a road side unit (RSU), a smart home terminal, an industrial sensor device and/or a medical device, etc. In some embodiments, the terminal may be a Redcap terminal or a predetermined version of a new air interface NR terminal (for example, an NR terminal of R17).

The access network device involved in the present disclosure may be a base station, for example, a base station of a third generation mobile communication (3G) network, a base station of a fourth generation mobile communication (4G) network, a base station of a fifth generation mobile communication (5G) network, or other evolved base stations.

The first transceiver may be a separate transceiver (ultra-low power wake-up receiver).

The second transceiver may be a main radio receiver.

The wake-up signal may be a low power wake-up signal (Low power WUS), which is used to wake up the second transceiver.

In one embodiment, the predetermined configuration information includes at least one of the following:
a monitoring period;
a monitoring offset;
a monitoring time within each monitoring period; or
a monitoring duration.

It should be noted that the monitoring period is a period during which the second transceiver monitors data. If the monitoring offset is not configured in the predetermined configuration information, data is monitored starting from 0. If the monitoring offset N is configured, data monitoring is performed after offsetting (waiting) N monitoring periods. In a single monitoring period, the duration for receiving data may be the duration of the onduration timer in the discontinuous reception DRX. The monitoring duration may include at least one monitoring period. The monitoring period may be referred to as a "long period" or a "short period". The monitoring period, whether "long period" or "short period" is an optional configuration.

For example, in FIG. 3, arrow 1 is the position where the main transceiver (corresponding to the second transceiver) is awakened; arrow 2 is the position where the inactive timer of the discontinuous reception DRX is started or restarted; duration 1 is the monitoring period; duration 2 is the monitoring duration; arrow 3 is the position where the main transceiver is turned off.

In one embodiment, in response to the first transceiver of the terminal receiving a wake-up signal, the terminal wakes up the second transceiver of the terminal, in which the power consumption of the first transceiver is less than the power consumption of the second transceiver; the access network device sends predetermined configuration information to the terminal; the terminal performs a processing operation based on the second transceiver based on the configuration result of the predetermined configuration information, in which the processing operation includes an operation of monitoring or stopping monitoring. Exemplarily, in response to receiving the predetermined configuration information, the terminal performs a monitoring operation based on the second transceiver; or, in response to not receiving the predetermined configuration information, the terminal stops performing a monitoring operation based on the second transceiver.

In one embodiment, in response to the first transceiver of the terminal receiving a wake-up signal, the terminal wakes up the second transceiver of the terminal, in which the power consumption of the first transceiver is less than the power consumption of the second transceiver; in response to the second transceiver being awakened, the terminal starts or restarts the inactive timer of the discontinuous reception DRX. The access network device sends predetermined configuration information to the terminal; in response to the inactive timer of the discontinuous reception DRX being expired or stopped and receiving the predetermined configuration information, the terminal performs a monitoring operation based on the second transceiver according to the predetermined configuration information; or, in response to the inactive timer of the discontinuous reception DRX being expired or stopped and not receiving the predetermined configuration information, the terminal stops the discontinuous reception DRX or turns off the second transceiver. It should be noted that the inactive timer of the discontinuous reception DRX being expired may be the inactive timer of the discontinuous reception DRX reaching the timing time; the inactive timer of the discontinuous reception DRX being stopped may after the terminal receives the MAC CE, for example, after receiving the first type of MAC CE or after receiving the second type of MAC CE.

In one embodiment, in response to a first transceiver of a terminal receiving a wake-up signal, the terminal wakes up a second transceiver of the terminal, in which the power consumption of the first transceiver is less than that of the second transceiver; the access network device sends predetermined configuration information to the terminal; after the inactivity timer of the discontinuous reception DRX expires or stops, the terminal performs a processing operation based on the second transceiver according to the configuration result of the predetermined configuration information, in which the processing operation includes an operation of monitoring or stopping monitoring. In response to the inactivity timer of the discontinuous reception DRX being expired or stopped and receiving predetermined configuration information, the terminal performs a monitoring operation based on the second transceiver according to the predetermined configuration information; or, in response to the inactivity timer of the discontinuous reception DRX being expired or stopped and not receiving predetermined configuration information, the terminal stops the discontinuous reception DRX or turns off the second transceiver.

In one embodiment, in response to a first transceiver of a terminal receiving a wake-up signal, the terminal wakes up a second transceiver of the terminal, in which the power consumption of the first transceiver is less than that of the second transceiver; the terminal performs a processing operation based on the second transceiver according to the configuration result of the predetermined configuration information and whether a first type MAC CE is received, in which the processing operation includes an operation of monitoring or stopping monitoring. Exemplarily, the access network device sends predetermined configuration information to the terminal; in response to receiving the first type of MAC CE and receiving the predetermined configuration information, the terminal performs a monitoring operation based on the second transceiver according to the predetermined configuration information; or, in response to receiving the first type of MAC CE and not receiving the predetermined configuration information, the terminal stops discontinuous reception of DRX or turns off the second transceiver.

In one embodiment, in response to the first transceiver of the terminal receiving a wake-up signal, the terminal wakes up the second transceiver of the terminal, in which the power consumption of the first transceiver is less than the power consumption of the second transceiver; the terminal performs a processing operation based on the second transceiver according to the configuration result of the predetermined configuration information and/or whether the second type MAC CE is received, in which the processing operation includes monitoring or stopping monitoring operations. Exemplarily, the access network device sends predetermined configuration information to the terminal; in response to receiving the second type MAC CE and the predetermined configuration information being configured, the terminal stops performing a monitoring operation based on the second transceiver according to the predetermined configuration information, where the monitoring duration timer can be controlled to stop or restart; or, in response to receiving the second type of MAC CE, the terminal stops discontinuous reception of DRX or turns off the second transceiver.

It should be noted that, in response to stopping the monitoring operation based on the second transceiver according to the predetermined configuration information, the terminal stops the discontinuous reception of DRX or turns off the second transceiver.

It should be noted that those skilled in the art can understand that the method provided in the embodiment of the present disclosure can be executed alone or together with some methods in the embodiment of the present disclosure or some methods in the related technology.

As shown in FIG. 12, a wireless communication method is provided in the present embodiment, the wireless communication method is executed by an access network device and includes the following step.

Step 121, a first type of media access control MAC control unit CE is sent to a terminal.

The first type of MAC CE is used to indicate that the terminal performs the processing operation based on the second transceiver according to the configuration result of the predetermined configuration information.

In one embodiment, in response to the first transceiver of the terminal receiving a wake-up signal, the terminal wakes up the second transceiver of the terminal, in which the power consumption of the first transceiver is less than the power consumption of the second transceiver; the access network device sends the first type of media access control MAC control unit CE to the terminal; in which the first type of MAC CE is used to indicate that the terminal performs the processing operation based on the second transceiver according to the configuration result of the predetermined configuration information. Based on the configuration result of the predetermined configuration information and whether the first type MAC CE is received, the terminal performs a processing operation based on the second transceiver, in which the processing operation includes a monitoring or stopping monitoring operation. Exemplarily, the access network device sends the predetermined configuration information to the terminal; in response to receiving the first type MAC CE and receiving the predetermined configuration information, the terminal performs a monitoring operation based on the second transceiver according to the predetermined configuration information; or, in response to receiving the first type MAC CE and not receiving the predetermined configuration information, the terminal stops discontinuous reception DRX or turns off the second transceiver.

It should be noted that those skilled in the art can understand that the method provided in the embodiment of the present disclosure can be performed alone or together with some methods in the embodiment of the present disclosure or some methods in related technologies.

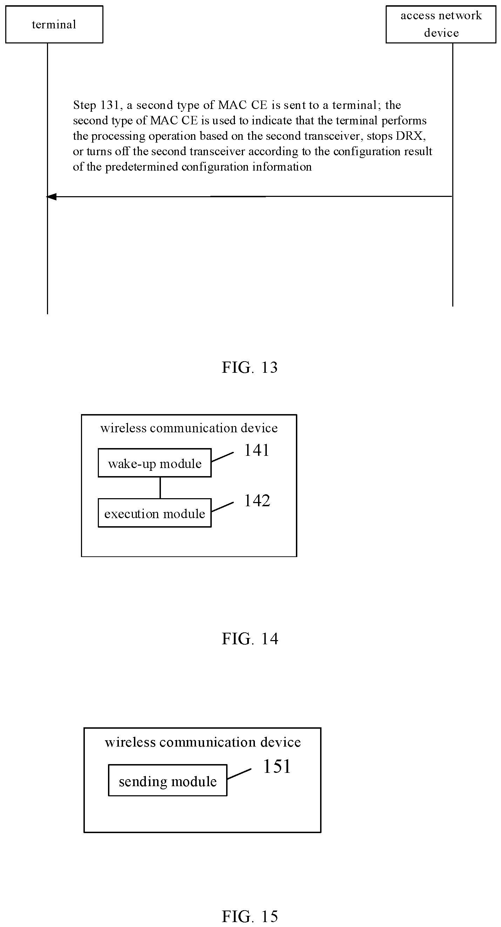

As shown in FIG. 13, a wireless communication method is provided in the present embodiment, the wireless communication method is performed by an access network device, and includes the following step.

Step 131, a second type of MAC CE is sent to a terminal.

The second type of MAC CE is used to indicate that the terminal performs the processing operation based on the second transceiver, stops DRX, or turns off the second transceiver according to the configuration result of the predetermined configuration information.

In one embodiment, in response to a first transceiver of a terminal receiving a wake-up signal, the terminal wakes up a second transceiver of the terminal, in which the power consumption of the first transceiver is less than the power consumption of the second transceiver; the access network device sends a second type MAC CE to the terminal; in which the second type of MAC CE is used to indicate that the terminal performs the processing operation based on the second transceiver, stops DRX, or turns off the second transceiver according to the configuration result of the predetermined configuration information. Based on the configuration result of the predetermined configuration information and/or whether the second type MAC CE is received, the terminal performs a processing operation based on the second transceiver, in which the processing operation includes an operation of monitoring or stopping monitoring. Exemplarily, the access network device sends predetermined configuration information to the terminal; in response to receiving the second type MAC CE and the predetermined configuration information being configured, the terminal stops performing a monitoring operation based on the second transceiver according to the predetermined configuration information; or, in response to receiving the second type MAC CE, the terminal stops discontinuous reception of DRX or turns off the second transceiver.

It should be noted that those skilled in the art can understand that the method provided in the embodiment of the present disclosure can be performed alone or together with some methods in the embodiment of the present disclosure or some methods in related technologies.

As shown in FIG. 14, a wireless communication device is provided in this embodiment, the wireless communication device includes a wake-up module 141 and an execution module 142.

The wake-up module 141 is configured to wake up a second transceiver of the terminal in response to a first transceiver of the terminal receiving a wake-up signal;
The execution module 142 is configured to perform a processing operation based on the second transceiver according to a configuration result of predetermined configuration information, in which the processing operation includes an operation of monitoring or an operation of stopping monitoring.

It should be noted that those skilled in the art can understand that the method provided in the embodiment of the present disclosure can be performed alone or together with some methods in the embodiment of the present disclosure or some methods in related technologies.

As shown in FIG. 15, a wireless communication method is provided in this embodiment, the wireless communication method is performed by an access network device and includes a sending module 151.

The sending module 151 is configured to send predetermined configuration information to a terminal;
The predetermined configuration information is used for a first transceiver of the terminal to perform a processing operation based on a second transceiver according to a configuration result of the predetermined configuration information after waking up the second transceiver of the terminal; in which the processing operation includes an operation of monitoring or an operation of stopping monitoring.

It should be noted that those skilled in the art can understand that the method provided in the embodiment of the present disclosure can be executed alone or together with some methods in the embodiment of the present disclosure or some methods in related technologies.

The embodiment of the present disclosure provides a communication device, the communication device includes:
a processor and
a memory for storing instructions executed by the processor.

The processor is configured to implement the wireless communication method applied to any embodiment of the present disclosure when running the instructions.

The processor may include various types of storage medium, which are non-temporary computer storage medium, and can continue to store information stored thereon after the communication device is powered off.

The processor can be connected to the memory through a bus, etc., and configured to read an executable program stored on the memory.

The embodiment of the present disclosure also provides a computer storage medium, having computer executable instructions stored thereon, the computer executable instructions are executed by a processor to implement the wireless communication method of any embodiment of the present disclosure.

Regarding the device in the above embodiment, the specific manner in which each module performs the operation has been described in detail in the embodiment of the method, and will not be repeated here.

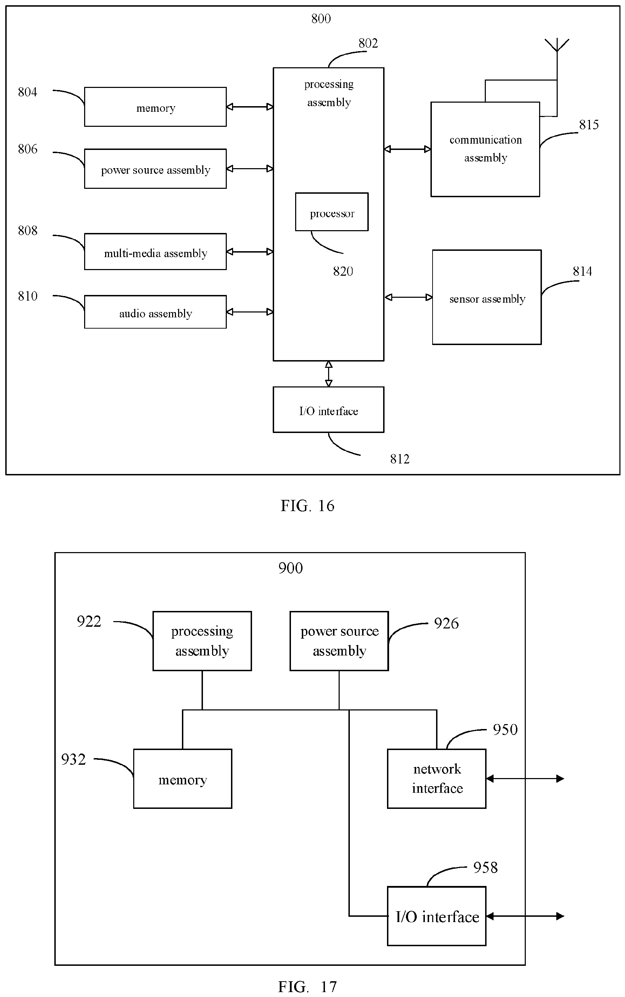

As shown in FIG. 16, an embodiment of the present disclosure provides a structure of a terminal.

Referring to the terminal 800 shown in FIG. 16, a terminal 800 is provided, the terminal may be a mobile phone, a computer, a digital broadcast terminal, a message transceiver device, a game console, a tablet device, a medical device, a fitness device, a personal digital assistant, etc.

Referring to FIG. 16, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions to complete all or part of the steps of the above method. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support the operation of the terminal 800. Examples of such data include instructions for any application or method operating on the terminal 800, contact data, phone book data, messages, pictures, videos, etc. The memory 804 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 806 provides power to various components of the terminal 800. The power component 806 may include a power management system, one or more power supplies, and other components associated with generating, managing and distributing power for the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor can sense not only the boundary of the touch or slide action, but also the duration and pressure associated with the touch or slide operation. In some embodiments, the multimedia component 808 includes a front camera and/or a rear camera. When the terminal 800 is in an operating mode, such as a shooting mode or a video mode, the front camera and/or the rear camera can receive external multimedia data. Each front camera and rear camera can be a fixed optical lens system or have focal length and optical zoom capabilities.

The audio component 810 is configured to output and/or input audio signals. For example, the audio component 810 includes a microphone (MIC), and when the terminal 800 is in an operating mode, such as a call mode, a recording mode, and a voice recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and the peripheral interface module, which may be a keyboard, a click wheel, a button, etc. These buttons may include, but are not limited to, a home button, a volume button, a start button, and a lock button.

The sensor component 814 includes one or more sensors for providing various aspects of status assessment for the terminal 800. For example, the sensor component 814 can detect the on/off state of the terminal 800, the relative positioning of components, such as the display and keypad of the terminal 800, the sensor component 814 can also detect the position change of the terminal 800 or a component of the terminal 800, the presence or absence of user contact with the terminal 800, the orientation or acceleration/deceleration of the terminal 800, and the temperature change of the terminal 800. The sensor component 814 may include a proximity sensor configured to detect the presence of nearby objects without any physical contact. The sensor component 814 may also include an optical sensor, such as a CMOS or CCD image sensor, applied in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network based on a communication standard, such as Wi-Fi, 2G or 3G, or a combination thereof. In an exemplary embodiment, the communication component 816 receives a broadcast signal or broadcast-related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the terminal 800 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above method.

In an exemplary embodiment, a non-temporary computer-readable storage medium including instructions is also provided, such as a memory 804 including instructions, and the instructions can be executed by a processor 820 of a terminal 800 to complete the above method. For example, the non-temporary computer-readable storage medium can be a ROM, a random access memory (RAM), a CD-ROM, a tape, a floppy disk, and an optical data storage device, etc.

As shown in FIG. 17, an embodiment of the present disclosure shows a structure of a base station. For example, a base station 900 can be provided as a network side device. Referring to FIG. 17, the base station 900 includes a processing component 922, which further includes one or more processors, and a memory resource represented by a memory 932 for storing instructions executable by the processing component 922, such as an application. The application stored in the memory 932 may include one or more modules each corresponding to a set of instructions. In addition, the processing component 922 is configured to execute instructions to perform the above method, and any method of the aforementioned application in the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS XTM, UnixTM, LinuxTM, FreeBSDTM or the like.

Other embodiments of the present disclosure will be readily apparent to those skilled in the art after considering the specification and practicing the present disclosure. The present disclosure is intended to cover any variation, use or adaptation that follows the general principles of the present disclosure and includes common knowledge or conventional technical means in the art that are not disclosed in the present disclosure. The description and embodiments are to be regarded as exemplary only, and the true scope and spirit of the present disclosure are indicated by the following claims.

It should be understood that the present disclosure is not limited to the precise structure described above and shown in the accompanying drawings, and various modifications and changes may be made without departing from the scope of the present disclosure. The scope of the present disclosure is limited only by the appended claims.

## Claims

1. A wireless communication method, performed by a terminal, and comprising:
waking up a second transceiver of the terminal in response to a first transceiver of the terminal receiving a wake-up signal;
performing a processing operation based on the second transceiver according to a configuration result of predetermined configuration information, wherein the processing operation comprises an operation of monitoring or an operation of stopping monitoring.

2. The wireless communication method according to claim 1, wherein the predetermined configuration information comprises at least one of:
a monitoring period;
a monitoring offset;
a monitoring time within each monitoring period; or
a monitoring duration.

3. The wireless communication method according to claim 2, further comprising:
receiving the predetermined configuration information.

4. The wireless communication method according to claim 1, further comprising:
starting or restarting an inactive timer of discontinuous reception (DRX) in response to the second transceiver being awakened.

5. The wireless communication method according to claim 4, further comprising:
stopping the inactive timer of the DRX in response to receiving a first type of media access control (MAC) control element (CE) or a second type of MAC CE.

6. The wireless communication method according to any one of claims 4 or 5, wherein the performing the processing operation based on the second transceiver according to the configuration result of the predetermined configuration information, comprises:
performing the monitoring operation based on the second transceiver according to the predetermined configuration information in response to the inactive timer of the DRX being expired or stopped and the predetermined configuration information being configured;
or,
stopping the DRX or turning off the second transceiver in response to the inactive timer of the DRX being expired or stopped and the predetermined configuration information being not configured.

7. The wireless communication method according to claim 2, wherein the performing the processing operation based on the second transceiver according to the configuration result of the predetermined configuration information, comprises:
performing the monitoring operation based on the second transceiver according to the predetermined configuration information in response to receiving the first type of MAC CE and the predetermined configuration information being configured;
or,
stopping the DRX or turning off the second transceiver in response to receiving the first type of MAC CE and the predetermined configuration information being not configured.

8. The wireless communication method according to claim 2, wherein the performing the processing operation based on the second transceiver according to the configuration result of the predetermined configuration information, comprises:
stopping the monitoring operation based on the second transceiver according to the predetermined configuration information in response to receiving the second type of MAC CE and the predetermined configuration information being configured.

9. The wireless communication method according to claim 2, further comprising:
stopping the DRX or turning off the second transceiver in response to receiving the second type of MAC CE.

10. The wireless communication method according to claim 2, further comprising:
stopping the DRX or turning off the second transceiver in response to stopping the monitoring operation based on the second transceiver based on the predetermined configuration information.

11. A wireless communication method, performed by an access network device, comprising:
sending predetermined configuration information to a terminal;
wherein the predetermined configuration information is used for a first transceiver of the terminal to perform a processing operation based on a second transceiver according to a configuration result of the predetermined configuration information after waking up the second transceiver of the terminal; wherein the processing operation comprises an operation of monitoring or an operation of stopping monitoring.

12. The wireless communication method according to claim 11, wherein the predetermined configuration information comprises at least one of:
a monitoring period;
a monitoring offset;
a monitoring time within each monitoring period; or
a monitoring duration.

13. The wireless communication method according to claim 11, further comprising:
sending a first type of media access control (MAC) control element (CE) to the terminal;
wherein the first type of MAC CE is used to indicate that the terminal performs the processing operation based on the second transceiver according to the configuration result of the predetermined configuration information.

14. The wireless communication method according to claim 11, further comprising:
sending a second type of MAC CE to the terminal;
wherein the second type of MAC CE is used to indicate that the terminal performs the processing operation based on the second transceiver, stops DRX, or turns off the second transceiver according to the configuration result of the predetermined configuration information.

15. A wireless communication device, comprising:
a wake-up module, configured to wake up a second transceiver of the terminal in response to a first transceiver of the terminal receiving a wake-up signal;
an execution module, configured to perform a processing operation based on the second transceiver according to a configuration result of predetermined configuration information, wherein the processing operation comprises an operation of monitoring or an operation of stopping monitoring.

16. A wireless communication method, performed by an access network device, comprising:
a sending module, configured to send predetermined configuration information to a terminal;
wherein the predetermined configuration information is used for a first transceiver of the terminal to perform a processing operation based on a second transceiver according to a configuration result of the predetermined configuration information after waking up the second transceiver of the terminal; wherein the processing operation comprises an operation of monitoring or an operation of stopping monitoring.

17. A communication device, comprising:
a memory; and
a processor, connected to the memory, and configured to execute computer executable instructions stored on the memory to implement the wireless communication method according to any one of claims 1 to 10 or 11 to 14.

18. A computer storage medium having computer executable instructions stored thereon, wherein the computer executable instructions are executed by a processor to implement the wireless communication method according to any one of claims 1 to 10 or 11 to 14.
